# EUROPÄISCHE PATENTSCHRIFT

(11) **EP 2 814 619 B1**
(45) Veröffentlichungstag und Bekanntmachung des Hinweises auf die Patenterteilung: **27.06.2018**
(21) Anmeldenummer: 13705391.4
(22) Anmeldetag: 07.02.2013
(51) Int. Cl.: B05B 15/12

(54) **VERFAHREN ZUM BEHANDELN VON GEGENSTÄNDEN UND ANLAGE HIERFÜR**
METHOD FOR TREATING OBJECTS AND SYSTEM THEREFOR
PROCÉDÉ DE TRAITEMENT D'OBJETS ET INSTALLATION CORRESPONDANTE

(30) Priorität: 18.02.2012 DE 102012003299
(43) Veröffentlichungstag der Anmeldung: 24.12.2014
(73) Patentinhaber: Eisenmann SE, 71032 Böblingen (DE)
(72) Erfinder: FERNHOLZ, Jürgen, 71083 Herrenberg (DE); SWOBODA, Werner, 71032 Böblingen (DE)
(74) Vertreter: Ostertag & Partner Patentanwälte mbB
(86) Internationale Anmeldenummer: PCT/EP2013/000362
(87) Internationale Veröffentlichungsnummer: WO 2013/120592

(56) Entgegenhaltungen:
- EP-A1- 0 253 980
- DE-A1- 4 211 465
- DE-A1-102010 030 280
- US-A- 4 687 686
- US-A- 5 023 116
- US-A1- 2011 132 197

## Beschreibung

Die Erfindung betrifft ein Verfahren zum Behandeln von Gegenständen, insbesondere zum Beschichten von Gegenständen mit lösemittelhaltigem Beschichtungsmaterial, bei welchem
a) die Gegenstände durch eine Behandlungskabine gefördert und dort in einem Behandlungsraum einer Behandlung unterzogen werden, bei welcher Lösemittel freigesetzt wird;
b) der Behandlungsraum von Kabinenluft durchströmt wird, welche dabei Lösemittel aufnimmt und dieses als Prozessluft aus dem Behandlungsraum abführt, wobei wenigstens ein Anteil von mit Lösemittel beladener Prozessluft als Umluft in einem Kreislauf wieder in den Behandlungsraum geleitet und wenigstens ein Anteil dieser Prozessluft als Abluft abgeführt werden kann;
c) dem Behandlungsraum außerdem Frischluft zugeführt wird, die zur Kabinenluft beiträgt;
   so dass
d) die Kabinenluft einen Umluftanteil und einen Frischluftanteil umfasst;
   wobei
e) die Lösemittelkonzentration in der Kabinenluft und/oder in der Prozessluft und/oder in der Abluft erfasst wird;
f) der Umluftanteil und der Frischluftanteil der Kabinenluft abhängig von der erfassten Lösemittelkonzentration geregelt wird.

Außerdem betrifft die Erfindung eine Anlage zum Behandeln von Gegenständen, insbesondere zum Beschichten von Gegenständen mit lösemittelhaltigem Beschichtungsmaterial, welche umfasst:
a) eine Behandlungskabine mit einem Behandlungsraum, in welchem Gegenstände einer Behandlung unterzogen werden, bei welcher Lösemittel freigesetzt wird;
b) ein Zuluftsystem, mittels welchem Kabinenluft erzeugbar ist, welche den Behandlungsraum durchströmt und dabei Lösemittel aufnimmt und dieses als Prozessluft aus dem Behandlungsraum abführt;
c) eine Umwälzeinrichtung, durch welche wenigstens ein Anteil von mit Lösemittel beladener Prozessluft als Umluft in einem Kreislauf wieder in den Behandlungsraum leitbar ist, wobei wenigstens ein Anteil der Prozessluft als Abluft abführbar ist;
d) eine Frischlufteinrichtung, durch welche dem Behandlungsraum außerdem Frischluft zuführbar ist, die zur Kabinenluft beiträgt;
   so dass
e) die Kabinenluft einen Umluftanteil und einen Frischluftanteil umfasst;
   wobei
f) der Umluftanteil und der Frischluftanteil der Kabinenluft abhängig von einer erfassten Lösemittelkonzentration in der Kabinenluft und/ oder in der Prozessluft und/oder in der Abluft mittels einer Regel- und Steuereinrichtung regelbar ist.

Ein solches Verfahren und eine solche Anlage sind beispielsweise aus der US 5 023 116A bekannt.

Beispielsweise werden in der Automobilindustrie Fahrzeugkarosserien oder Teile davon Behandlungen unterzogen, bei welchen Lösemittel freigesetzt werden kann. Lösemittel kann z.B. aus Oberflächenbeschichtungen der Gegenstände austreten, wenn diese in einem Trockner getrocknet werden. Lösemittel werden jedoch auch bereits freigesetzt, wenn die Gegenstände mit einem Lack oder einer anderen Beschichtung versehen werden. Zwar haben sich mittlerweile auch Beschichtungsmaterialien auf Wasserbasis etabliert, häufig enthalten die verwendeten Beschichtungsmaterialien, und dabei insbesondere Lacke, jedoch andere Lösemittel.

Bei der manuellen oder automatischen Applikation von Lacken auf Gegenstände wird nämlich ein Teilstrom des Lackes, der im Allgemeinen sowohl Festkörper und/oder Bindemittel als auch Lösemittel enthält, nicht auf den Gegenstand appliziert. Dieser Teilstrom wird in der Fachwelt "Overspray" genannt. Der Overspray wird von der Kabinenluft, die durch die Lackierkabine strömt, erfasst und als Prozessluft einer Abscheidung zugeführt, sodass diese Prozessluft gegebenenfalls nach einer geeigneten Konditionierung zumindest zum Teil als Umluft wieder in die Beschichtungskabine zurückgeleitet werden kann.

Während die Abscheidung der Festkörper und/oder Bindemittelbestandteile oder sonstiger Komponenten des Overspray mit den an und für sich bekannten Abscheidesystemen, seien es Nassabscheider oder Trockenabscheider und dabei insbesondere elektrostatisch arbeitende Abscheidesysteme, gut gelingt, verbleibt auch nach der Abscheidung Lösemittel in der Prozessluft der Lackierkabine, welches dann mit der Umluft wieder in die Lackierkabine gelangt.

Da sich so im Laufe der Zeit die Lösemittelkonzentration in der Kabinenluft immer weiter erhöhen würde, würde nach einer gewissen Zeit eine Lösemittelkonzentration in der Lackierkabine vorliegen, die größer als ein maximal zulässiger oberer Schwellenwert wäre, der beispielsweise aus Explosionsschutzgründen nicht überschritten werden darf.

Aus diesem Grund wird immer nur ein Teil der lösemittelhaltigen Prozessluft wieder als Umluft in die Lackierkabine zurückgeführt. Der restliche Anteil der für den Lufthaushalt erforderlichen Kabinenluft wird durch unbelastete Frischluft bereitgestellt.

Die Lösemittelkonzentration in der Prozessluft und damit auch in der Umluft, die zurück in die Lackierkabine geleitet wird, hängt jedoch unter anderem stark von den verwendeten Beschichtungsmaterialien, der Applikationsmethode und den zu beschichtenden Gegenständen ab und kann beträchtlich variieren.

In der Praxis wird der Frischluftanteil immer so groß gewählt, dass die Lösemittelkonzentration in der Kabinenluft stets sicher unterhalb des zulässigen oberen Schwellenwerts für die Lösemittelkonzentration bleibt. Bei vom Markt her bekannten Anlagen und Verfahren sind der Frischluftanteil und der Umluftanteil der Kabinenluft fest und unveränderlich vorgegeben. Das vorgegebene Verhältnis von Frischluft und Umluft wird dabei nach Erfahrungswerten eingestellt und berücksichtigt einen Sicherheitspuffer, so dass der zulässige obere Schwellenwert für die Lösemittelkonzentration in der Kabinenluft niemals überschritten wird. Dabei kann es jedoch vorkommen, dass der zugeführte Frischluftanteil viel größer ist als es für die Einhaltung der Explosionsschutzgrenzen notwendig wäre und die Lösemittelkonzentration in der Kabinenluft dadurch deutlich kleiner als zulässig wird. Im ungünstigsten Fall wird aus Sicherheitsgründen die gesamte Kabinenluft durch Frischluft gebildet und die lösemittelhaltige Prozessluft vollständig als Abluft abgeführt und beispielsweise einer thermischen oder regenerativen Nachverbrennungsanlage zugeführt.

Hierdurch werden jedoch Energie und Ressourcen vergeudet, da einerseits ein zu großer Anteil der Prozessluft nicht wiederverwendet und andererseits ein zu großer Anteil an Frischluft zugeführt wird, welche ebenfalls eine Grundkonditionierung benötigt, die Energie kostet.

Es ist daher Aufgabe der vorliegenden Erfindung, ein Verfahren und eine Anlage der eingangs genannten Art bereitzustellen, welche diesen Gedanken Rechnung tragen.

Diese Aufgabe wird bei einem Verfahren der eingangs genannten Art dadurch gelöst, dass
g) dem Behandlungsraum die Frischluft über eine Eingangsschleuse und/oder eine Ausgangsschleuse zugeführt wird;
h) die Frischluft der Eingangsschleuse und/oder der Ausgangsschleuse separat zugeführt wird.

Erfindungsgemäß werden somit der Umluftanteil und der Frischluftanteil der Kabinenluft abhängig von der tatsächlich in der Kabinenluft bzw. in der Prozessluft oder in der Abluft vorhandenen Lösemittelkonzentration geregelt. Dabei dient als Regelparameter vorzugsweise ein oberer Schwellenwert der Lösemittelkonzentration, welcher nicht überschritten werden darf und im Falle der Prozessluft und der Abluft auch berücksichtigt, dass die Kabinenluft beim Durchströmen des Behandlungsraumes noch weiteres Lösemittel aufnimmt. Durch diese Maßnahmen kann der nun variable Frischluftanteil der Kabinenluft im Rahmen der Regelparameter so klein wie möglich und so groß wie nötig gehalten werden.

Die Lösemittelkonzentration in der Kabinenluft oder der Prozessluft oder der Abluft kann in Kenntnis bestimmter Anlagenparameter durch Berechnung erfasst werden; hierauf wird auch weiter unten nochmals eingegangen. Es ist jedoch von Vorteil, wenn die Lösemittelkonzentration in der Kabinenluft und/oder in der Prozessluft und/oder in der Abluft mittels eines Lösemittelsensors erfasst wird. Derartige Sensoren sind im Stand der Technik etabliert.

Die Umluft kann dem Behandlungsraum vorteilhaft über einen Luftraum der Behandlungskabine und/oder eine Eingangsschleuse und/oder eine Ausgangsschleuse zugeführt werden.

Dabei ist es günstig, wenn eingestellt werden kann, welcher Anteil der Prozessluft als Umluft zu dem Luftraum der Behandlungskabine, zur Eingangsschleuse oder zur Ausgangsschleuse gelangt.

Besonders vorteilhaft ist es dann, wenn der jeweilige Volumenstrom der Umluft zu dem Luftraum der Behandlungskabine und/oder zu der Eingangsschleuse und/oder zu der Ausgangsschleuse eingestellt werden kann. Auf diese Weise kann eine individuelle Zustromverteilung der Umluft an die einzelnen Zugangsstellen des Behandlungsraumes erfolgen.

Auch hierbei ist es im Hinblick auf eine individuelle Strömungseinstellung günstig, wenn der jeweilige Volumenstrom der Frischluft zu der Eingangsschleuse und/oder zur Ausgangsschleuse eingestellt werden kann.

Die oben genannte Aufgabe wird bei einer Anlage der eingangs genannten Art dadurch gelöst, dass
g) der Eingangsschleuse und/oder der Ausgangsschleuse Frischluft aus einer Frischluftquelle zuführbar ist, welche über die Eingangsschleuse und/oder die Ausgangsschleuse in den Behandlungsraum geleitet wird;
h) der Eingangsschleuse und/oder der Ausgangsschleuse die Frischluft separat zuführbar ist.
Die Vorteile der nachfolgend erläuterten Weiterbildungen entsprechen sinngemäß entsprechend den oben zum Verfahren erläuterten Vorteilen.

Dementsprechend ist es günstig, wenn ein Lösemittelsensor vorhanden ist, mit welchem die Lösemittelkonzentration in der Kabinenluft und/oder in der Prozessluft und/oder in der Abluft erfassbar ist.

Vorzugsweise ist dem Behandlungsraum (14) die Umluft über einen Luftraum der Behandlungskabine und/oder eine Eingangsschleuse und/oder eine Ausgangsschleuse zuführbar, in welche Umluft durch Leitungen geleitet wird.

Ferner ist bevorzugt, dass Mittel vorhanden sind, durch welche einstellbar ist, welcher Anteil der Prozessluft als Umluft zu dem Luftraum der Beschichtungskabine, zur Eingangsschleuse oder zur Ausgangsschleuse gelangt.

Es ist außerdem günstig, wenn Mittel vorhanden sind, durch welche der jeweilige Volumenstrom der Umluft zu dem Luftraum der Behandlungskabine und/oder zu der Eingangsschleuse und/oder zu der Ausgangsschleuse einstellbar ist.

Bevorzugt ist es außerdem, wenn Mittel vorhanden sind, durch welche der jeweilige Volumenstrom der Frischluft zu der Eingangsschleuse und/oder zur Ausgangsschleuse einstellbar ist.

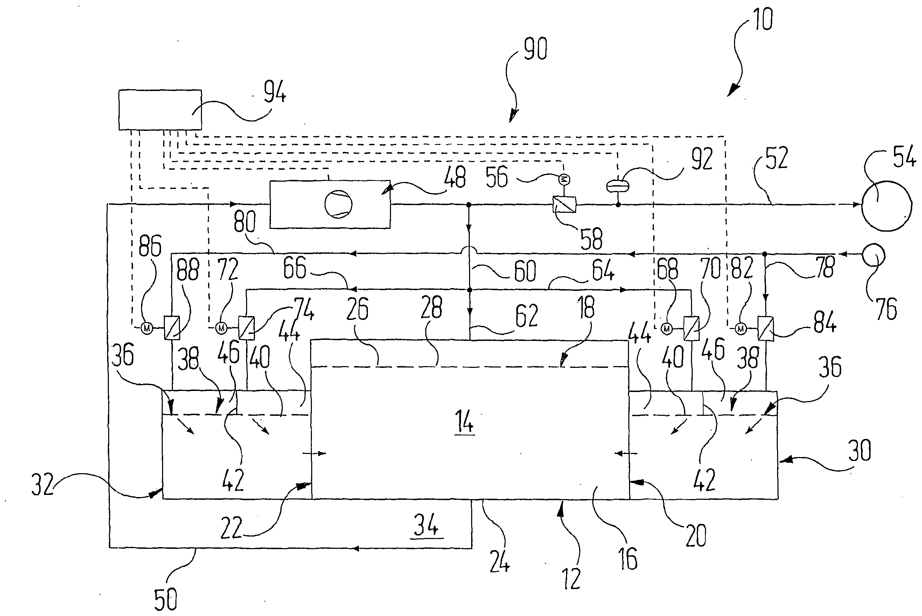

Ein Ausführungsbeispiel der Erfindung wird nachfolgend anhand der einzigen Figur erläutert, welche als Beispiel für eine Anlage zum Behandeln von Gegenständen eine Lackieranlage zeigt, die insgesamt mit 10 bezeichnet ist. Zu beschichtende Gegenstände sind vorliegend nicht eigens dargestellt.

Die Lackieranlage 10 umfasst als Beschichtungskabine eine Lackierkabine 12 mit einem Lackiertunnel 14, der einen Behandlungsraum definiert und von vertikalen Seitenwänden 16 und einer horizontalen Kabinendecke 18 begrenzt, jedoch an den Stirnseiten 20 und 22 offen ist. Darüber hinaus ist der Lackiertunnel 14 über einen Kabinenboden 24 nach unten hin offen. Hierzu ist der Kabinenboden 24 beispielsweise als Gitterrost oder dergleichen ausgebildet. Die Kabinendecke 18 ist als untere Begrenzung eines Kabinenluftzuführraumes 26 als Filterdecke 28 ausgebildet.

Der Lackiertunnel 14 erstreckt sich zwischen einer Eingangsschleuse 30 und einer Ausgangsschleuse 32 an seinen Stirnseiten 20 bzw. 22, welche den Lackiertunnel 14 mit einem den Lackiertunnel 14 umgebenden Arbeitsbereich 34 verbinden. Dieser umgebende Arbeitsbereich 34 ist in der Regel eine die Lackierkabine 12 umgebende Werkshalle.

Sowohl die Eingangsschleuse 30 als auch die Ausgangsschleuse 32 haben eine Schleusendecke 36, welche als untere Begrenzung eines jeweiligen Schleusenluftzuführraumes 38 als Filterdecke 40 ausgebildet sind und im Aufbau der Kabinendecke 18 der Lackierkabine 12 entsprechen. Die beiden Schleusenluftzuführräume 38 sind mittels einer Zwischenwand 42 jeweils nochmals in einen an den Lackiertunnel 14 angrenzenden Umluftzuführraum 44 und einen von dem Lackiertunnel 14 abliegenden Frischluftzuführraum 46 unterteilt.

Mittels eines nicht eigens gezeigten Fördersystems werden zu lackierende Gegenstände durch die Lackierkabine 12 hindurch gefördert und dabei über die Eingangsschleuse 30 in den Lackiertunnel 14 hinein transportiert, dort durch ebenfalls nicht gesondert gezeigte Applikationsgeräte mit einem lösemittelhaltigen Beschichtungsmaterial, beispielsweise einem lösemittelhaltigen Lack, beschichtet und hiernach aus dem Lackiertunnel 14 und über die Ausgangsschleuse 32 aus der Lackierkabine 12 herausgeführt. Die frisch lackierten Gegenstände werden dann in an und für sich bekannter Weise in sich anschließenden Stationen behandelt und dabei insbesondere getrocknet.

Beim Lackiervorgang durchströmt nun Kabinenluft den Lackiertunnel 14 und nimmt dabei Overspray mit dem darin enthaltenen Lösemittel auf und führt dieses als Prozessluft aus dem Lackiertunnel 14 ab. Die Lackieranlage 10 umfasst eine in der Figur nur stark schematisch gezeigte Umwälzeinrichtung 48, mittels welcher diese dann mit Overspray einschließlich Lösemittel beladene Prozessluft in an und für sich bekannter Weise umgewälzt und weitgehend von mitgeführten Overspraypartikeln befreit sowie konditioniert wird. Hierzu gelangt die mit Overspray und Lösemittel beladene Prozessluft über den Kabinenboden 24 in eine Absaugleitung 50, über welche sie von der Umwälzeinrichtung 48 aus dem Lackiertunnel 14 ab- und angesaugt wird.

Im Sinne der eingangs erläuterten Begriffe soll nachfolgend "Kabinenluft" diejenige Luft beschreiben, welche den Lackiertunnel 14 durchströmt und dabei Lösemittel aufnimmt. Der Begriff "Prozessluft" gibt dagegen diese Kabinenluft an, nachdem sie den Lackiertunnel 14 durchströmt und über die Absaugleitung 50 verlassen hat, unabhängig davon, ob diese bereits weiter aufbereitet wurde oder nicht. Die aufbereitete Prozessluft wird dagegen - zumindest teilweise - als "Umluft" wieder in einem Kreislauf in den Lackiertunnel 14 zurückgeführt. Als "Abluft" wird vorliegend derjenige Anteil der Prozessluft verstanden, der nicht als Umluft wieder in einem Kreislauf in den Lackiertunnel 14 zurückgeführt wird.

Zum Abscheiden der Overspraypartikel aus der lösemittelhaltigen Prozessluft werden in der Umwälzeinrichtung 48 bekannte Filtertechniken eingesetzt, wie beispielsweise Elektrofilter, Trägheitsabscheider, Vliesfilter, Absolutfilter, Nassabscheider und dergleichen. Bei der nachfolgenden Konditionierung kann es sich insbesondere um ein Nachregeln der Temperatur und der Luftfeuchte handeln.

Von der Umwälzeinrichtung 48 führt eine Luftleitung 52 zu einer regenerativen oder thermischen Nachverbrennungsanlage 54. Die Luftleitung 52 kann mittels einer über einen Stellmotor 56 betriebenen Stellklappe 58 variabel geöffnet oder verschlossen werden. Zwischen der Umwälzeinrichtung 48 und der Stellklappe 58 zweigt von der Luftleitung 52 eine Umluftleitung 60 ab, die sich ihrerseits in eine zur Lackierkabine 12 führende Umluftleitung 62, eine zur Eingangsschleuse 30 führende Umluftleitung 64 und eine zur Ausgangsschleuse 32 führende Umluftleitung 66 gabelt.

Die zur Lackierkabine 12 führende Umluftleitung 62 mündet in den Kabinenluftzuführraum 26 der Lackierkabine 12. Die zur Eingangsschleuse 30 führende Umluftleitung 64 führt zu dem Umluftzuführraum 44 der Eingangsschleuse 30 und die zur Ausgangsschleuse 32 führende Umluftleitung 66 führt entsprechend zum Umluftzuführraum 44 der Ausgangsschleuse 32. Die zur Eingangsschleuse 30 führende Umluftleitung 64 kann mittels einer über einen Stellmotor 68 betriebenen Stellklappe 70 variabel geöffnet oder verschlossen werden. In entsprechender Weise ist in der zur Ausgangsschleuse 32 führenden Umluftleitung 66 eine über einen Stellmotor 72 betriebene Stellklappe 74 vorhanden.

Ein Anteil der lösemittelhaltigen Prozessluft wird nun als Umluft in einem Kreislauf wieder in den Lackiertunnel 14 geleitet. Mittels der Stellklappe 58 in der Luftleitung 52 kann dabei eingestellt werden, welcher Anteil der von der Umwälzeinrichtung 48 kommenden und mit Lösemittel beladenen Prozessluft als Abluft zur Nachverbrennungsanlage 54 oder als Umluft in einem Kreislauf wieder in die Lackierkabine 14 geführt wird. Wenn die Stellklappe 58 die Luftleitung 52 verschließt, wird somit z.B. die gesamte lösemittelhaltige Prozessluft als Umluft in einem Kreislauf in die Lackierkabine 14 geleitet.

Mittels der Stellklappen 70 und 74 in den zur Eingangsschleuse 30 bzw. zur Ausgangsschleuse 32 führenden Umluftleitungen 64 bzw. 66 kann außerdem eingestellt werden, welche Anteile dieser Umluft in den Kabinenluftzuführraum 26 und in die Umluftluftzuführräume 44 der Eingangs- und der Ausgangsschleuse 30 bzw. 32 einströmen. Aus dem Kabinenluftzuführraum 26 strömt die Umluft dann von oben nach unten in und durch den Lackiertunnel 14. Aus den Umluftzuführräumen 44 strömt die dort ankommende Umluft in die jeweilige Schleuse 30 bzw. 32 und von dort in weitgehend horizontaler Richtung in den Lackiertunnel 14 ein, was in der Figur durch Pfeile angedeutet ist.

Die Frischluftzuführräume 46 der Eingangsschleuse 30 und der Ausgangsschleuse 32 werden aus einer Frischluftquelle 76 über eine zur Eingangsschleuse 30 führende Frischluftleitung 78 bzw. eine zur Ausgangsschleuse führende Frischluftleitung 80 mit Frischluft gespeist, welche gemeinsam eine Frischlufteinrichtung bilden. Die zur Eingangsschleuse 30 führende Frischluftleitung 78 kann mittels einer über einen Stellmotor 82 betriebenen Stellklappe 84 variabel geöffnet oder verschlossen werden. Auch in der zur Ausgangsschleuse 32 führenden Frischluftleitung 80 ist zur Einstellung des Volumenstroms eine über einen Stellmotor 86 betriebene Stellklappe 88 angeordnet.

Die Frischluft strömt aus den Frischluftzuführräumen 46 in die jeweilige Schleuse 30 bzw. 32 und von dort in weitgehend horizontaler Richtung in den Lackiertunnel 14, wobei sie sich auf dem Strömungsweg mit der Umluft aus dem jeweiligen Umluftzuführraum 44 vermischt.

Die durch den Lackiertunnel 14 strömende Kabinenluft umfasst folglich einen Umluftanteil und einen Frischluftanteil. Die Umwälzeinrichtung 48 mit den zugehörigen Leitungen 50, 52, 60, 62, 64 und 66 zusammen mit der Frischluftquelle 76 und den Frischluftleitungen 78 und 80 mit allen Stellmotoren und Steuerklappen bilden hierfür insgesamt ein Zuluftsystem 90, durch welches die Kabinenluft erzeugt wird, die den Lackiertunnel 14 durchströmt.

Stromab der Stellklappe 58 ist in der Luftleitung 52 ein Lösemittelsensor 92 angeordnet, mittels welchem die Lösemittelkonzentration der zur Nachverbrennungsanlage 54 strömenden lösemittelhaltigen Abluft erfasst werden kann, wie es an und für sich bekannt ist. Der Lösemittelsensor 92 übergibt seine Ausgangssignale an eine Steuer- und Regeleinheit 94, welche ihrerseits die Umwälzeinrichtung 48, d.h. deren Absaugleistung, und die Stellmotoren 56, 68, 72, 82 und 86 der Stellklappen 58, 70, 74, 84 und 88 ansteuert. Die Kommunikations- und Steuerleitungen von und zu der Steuer- und Regeleinheit 94 sind lediglich gestrichelt gezeigt und nicht eigens mit einem Bezugszeichen versehen.

Die Übertragung der Ausgangssignale des Lösemittelsensors 92 kann kontinuierlich oder getaktet erfolgen, wobei im letzteren Fall die zeitlichen Abstände zwischen zwei Erfassungen der Lösemittelkonzentration in der Abluft von den Betriebsparametern der Anlage 10, wie der Art der Applikation, des Beschichtungsmaterials und der zu beschichtenden Gegenstände, abhängen.

Im Betrieb der Lackieranlage 10 werden nun der Umluftanteil und der Frischluftanteil der Kabinenluft abhängig von der Lösemittelkonzentration in der lösemittelhaltigen Abluft geregelt.

Wenn deren Lösemittelkonzentration ansteigt und sich einem vorgegebenen Schwellenwert nähert, der beispielsweise aus Explosionsschutzgründen nicht überschritten werden darf, wird der Anteil der im Kreislauf geführten und lösemittelhaltigen Umluft verringert. Hierzu steuert die Steuer- und Regeleinheit 94 den Stellmotor 56 so an, dass die Stellklappe 58 öffnet und der Volumenstrom der Abluft über die Luftleitung 52 zur Nachverbrennungsanlage 54 erhöht wird.

Die Gesamtmenge der durch den Lackiertunnel 14 strömenden Kabinenluft muss jedoch konstant bleiben und darf nicht abfallen. Daher werden im Gegenzug die Stellmotoren 82 und 86 so angesteuert, dass die Stellklappen 84 und 88 in den Frischluftleitungen 78 und 80 so weit öffnen, dass der nun verringerte Umluftstrom über die Umluftleitungen 62, 64 und 66 ausgeglichen wird.

Insgesamt wird auf diese Weise der Umluftanteil der Kabinenluft verringert und der Frischluftanteil der Kabinenluft erhöht. Durch den nun höheren Anteil an Frischluft in der insgesamt durch den Lackiertunnel 14 geführten Kabinenluft verringert sich die Konzentration des darin mitgeführten Lösemittels.

Wenn die Daten des Lösemittelsensors 92 eine Lösemittelkonzentration widerspiegeln, die unterhalb des oberen zulässigen Schwellenwerts liegt, besteht ein Einsparpotential für Frischluft. Daher werden in diesem Fall die Stellmotoren 56, 82 und 86 so angesteuert, dass die Stellklappe 58 in der Luftleitung 52 schließt und die Stellklappen 84 und 88 in den Frischluftleitungen 78 und 80 entsprechend öffnen. Hierdurch wird der Anteil an lösemittelhaltiger Umluft in der insgesamt durch den Lackiertunnel 14 geführten Kabinenluft wieder erhöht und der Anteil an zugeführter Frischluft wieder verringert.

Insgesamt ist durch die Stellmotoren, Stellklappen und Leitungen 56 bis 88 und die Regel- und Steuereinheit 94 insgesamt eine Regel- und Steuereinrichtung etabliert, durch welchen abhängig von der Lösemittelkonzentration in der aus dem Lackiertunnel 14 abgeführten Abluft der Umluftanteil und der Frischluftanteil der insgesamt durch den Lackiertunnel 14 strömenden Kabinenluft derart geregelt werden kann. In der Praxis kann die Ist-Lösemittelkonzentration in der Abluft immer an dem maximal zulässigen oberen Schwellenwert gehalten werden, so dass der erforderliche Frischluftbeitrag zur Kabinenluft immer so klein wie möglich ist.

Durch die Stellklappen 70 und 74 in den zur Eingangsschleuse 30 bzw. zur Ausgangsschleuse 32 führenden Umluftleitungen 64 und 66 kann darüber hinaus individuell eingestellt werden, wie groß der Anteil der Umluft und damit der jeweilige Volumenstrom der Umluft ist, der zur Eingangsschleuse 30, zur Ausgangsschleuse 32 und zum Kabinenluftzuführraum 26 gelangt. Die jeweiligen Volumenströme können auch voneinander abweichen.

Letzteres gilt auch für die Frischluftströme, die zur Eingangsschleuse 30 bzw. zur Ausgangsschleuse 32 geführt werden. Auf diese Weise kann bei bekannter Lösemittelkonzentration der Abluft aus dem Lackiertunnel 14 zusätzlich die Lösemittelkonzentration der Zuluft jeweils separat eingestellt werden, welche über die Eingangsschleuse 30 oder die Ausgangsschleuse 32 in den Lackiertunnel 14 eintritt, wobei die Volumenströme der Zuluft aus den Schleusen 30, 32 in den Lackiertunnel 14 insgesamt konstant gehalten werden können.

Bei einem Pausenbetrieb, in welchem in dem Lackiertunnel 14, oder allgemein in einem Behandlungsraum, keine Behandlung durchgeführt und somit kein weiteres Lösemittel freigesetzt wird, kann die Prozessluft sogar vollständig rezirkuliert werden, ohne dass Frischluft in die Kabinenluft eingebracht werden muss. Hierzu wird die Luftleitung 52 durch die Stellklappe 58 vollständig verschlossen, wodurch die gesamte Prozessluft in die Umluftleitung 60 und zurück zur Lackierkabine 12 strömt.

Grundsätzlich ist zur Regelung und Steuerung der Lackieranlage 10 wichtig, dass die Lösemittelkonzentration der aus dem Lackiertunnel 14 ausströmenden lösemittelhaltigen Luft erfasst wird. Dies wird bei der oben erläuterten Lackieranlage 10 durch den Lösemittelsensor 92 erreicht, der die Lösemittelkonzentration in der Abluft erfasst.

Bei nicht eigens gezeigten Abwandlungen kann auch an anderen Stellen ein Lösemittelsensor positioniert sein, beispielsweise unmittelbar vor oder hinter der Umwälzeinrichtung 48, so dass die Lösemittelkonzentration in der Prozessluft erfasst wird. Auch kann ein Lösemittelsensor für die Kabinenluft in dem Lackiertunnel 14 angeordnet sein, mit welchem die Lösemittelkonzentration in dem Lackiertunnel 14 und damit in der Kabinenluft erfasst wird. Außerdem kann ein Lösemittelsensor in der Umluftleitung 60, in der zur Lackierkabine 12 führenden Umluftleitung 62, in der zur Eingangsschleuse 30 führenden Umluftleitung 64 und/oder der zur Ausgangsschleuse 32 führenden Umluftleitung 66 vorhanden sein, wodurch die Lösemittelkonzentration in der Umluft erfasst werden kann. Insgesamt können ein einzelner oder auch mehrere Lösemittelsensoren an den oben genannten Positionen alternativ oder als Ergänzung zu dem Lösemittelsensor 92 für die Abluft vorhanden sein.

Bei einer weiteren Abwandlung kann jedoch auch auf einen solchen Lösemittelsensor verzichtet werden, wenn eine Erfassung der Lösemittelkonzentration durch eine Berechnung der Ist-Lösemittelkonzentration der lösemittelhaltigen Abluft oder auch der lösemittelhaltigen Kabinenluft erfolgen kann. Die hierzu erforderlichen Daten können beispielsweise dadurch erhalten werden, dass die von den Applikationsgeräten abgegebene Lackmenge in an und für sich bekannter Weise in Echtzeit überwacht wird und zugleich die zu beschichtende Oberfläche der Gegenstände und deren durchschnittliche Lackaufnahmemenge berücksichtigt wird.

Im Falle der Echtzeit-Berechnung der Lösemittelkonzentration können zunächst in einem Testbetrieb die Abhängigkeiten der Regelgrößen von den Volumenströmen der Umluft und der Frischluft als eine Art Eichparameter erfasst werden und die Lackieranlage 10 dann auf der Basis dieser Eichparameter betrieben wird.

Gegebenenfalls kann in den Schleusenluftzuführräumen 38 auf die Zwischenwand 42 verzichtet werden. Bei einer weiteren, nicht eigens gezeigten Abwandlung kann die Frischluftleitung 78 auch mit der zur Eingangsschleuse 30 führende Umluftleitung 64 und die Frischluftleitung 80 mit der zur Ausgangsschleuse 32 führende Umluftleitung 66 zu jeweils einer Mischleitung zusammengeführt werden, die dann in den jeweiligen Schleusenluftzuführraum 38 der Eingangsschleuse 30 bzw. der Ausgangsschleuse 32 mündet.

In diesem Fall vermischen sich die Frischluft und die Umluft in dieser Mischleitung und gelangen gemeinsam in den jeweiligen Schleusenluftzuführraum 38, welche dann ebenfalls nicht mehr zweiteilig ausgebildet sein muss.

## Patentansprüche

1. Verfahren zum Behandeln von Gegenständen, insbesondere zum Beschichten von Gegenständen mit lösemittelhaltigem Beschichtungsmaterial, bei welchem
a) die Gegenstände durch eine Behandlungskabine (12) gefördert und dort in einem Behandlungsraum (14) einer Behandlung unterzogen werden, bei welcher Lösemittel freigesetzt wird;
b) der Behandlungsraum (14) von Kabinenluft durchströmt wird, welche dabei Lösemittel aufnimmt und als Prozessluft aus dem Behandlungsraum abführt, wobei wenigstens ein Anteil von mit Lösemittel beladener Prozessluft als Umluft in einem Kreislauf wieder in den Behandlungsraum (14) geleitet und wenigstens ein Anteil der Prozessluft als Abluft abgeführt werden kann;
c) dem Behandlungsraum (14) außerdem Frischluft zugeführt wird, die zur Kabinenluft beiträgt;
so dass
d) die Kabinenluft einen Umluftanteil und einen Frischluftanteil umfasst;
wobei
e) die Lösemittelkonzentration in der Kabinenluft und/oder in der Prozessluft und/oder in der Abluft erfasst wird;
f) der Umluftanteil und der Frischluftanteil der Kabinenluft abhängig von der erfassten Lösemittelkonzentration geregelt wird,
**dadurch gekennzeichnet, dass**
g) dem Behandlungsraum (14) die Frischluft über eine Eingangsschleuse (30) und/oder eine Ausgangsschleuse (32) zugeführt wird;
h) die Frischluft der Eingangsschleuse (30) und/oder der Ausgangsschleuse (32) separat zugeführt wird.

2. Verfahren nach Anspruch 1, **dadurch gekennzeichnet, dass** die Lösemittelkonzentration in der Kabinenluft und/oder in der Prozessluft und/oder in der Abluft mittels eines Lösemittelsensors (92) erfasst wird.

3. Verfahren nach Anspruch 1 oder 2, **dadurch gekennzeichnet, dass** dem Behandlungsraum (14) die Umluft über einen Luftraum (26) der Behandlungskabine (12) und/oder eine Eingangsschleuse (30) und/oder eine Ausgangsschleuse (32) zugeführt wird.

4. Verfahren nach Anspruch 3, **dadurch gekennzeichnet, dass** eingestellt werden kann, welcher Anteil der Abluft als Umluft zu dem Luftraum (26) der Behandlungskabine (12), zur Eingangsschleuse (30) oder zur Ausgangsschleuse (32) gelangt.

5. Verfahren nach Anspruch 4, **dadurch gekennzeichnet, dass** der jeweilige Volumenstrom der Umluft zu dem Luftraum (26) der Behandlungskabine (12) und/oder zu der Eingangsschleuse (30) und/oder zu der Ausgangsschleuse (32) eingestellt werden kann.

6. Verfahren nach einem der Ansprüche 1 bis 5, **dadurch gekennzeichnet, dass** der jeweilige Volumenstrom der Frischluft zu der Eingangsschleuse (30) und/oder zur Ausgangsschleuse (32) eingestellt werden kann.

7. Anlage zum Behandeln von Gegenständen, insbesondere zum Beschichten von Gegenständen mit lösemittelhaltigem Beschichtungsmaterial, welche umfasst:
a) eine Behandlungskabine (12) mit einem Behandlungsraum (14), in welchem Gegenstände einer Behandlung unterzogen werden, bei welcher Lösemittel freigesetzt wird;
b) ein Zuluftsystem (90), mittels welchem Kabinenluft erzeugbar ist, welche den Behandlungsraum (14) durchströmt und dabei Lösemittel aufnimmt und als Prozessluft aus dem Behandlungsraum (14) abführt;
c) eine Umwälzeinrichtung (48), durch welche wenigstens ein Anteil von mit Lösemittel beladener Prozessluft als Umluft in einem Kreislauf wieder in den Behandlungsraum (14) leitbar ist, wobei wenigstens ein Anteil der Prozessluft als Abluft abführbar ist;
d) eine Frischlufteinrichtung (76, 78, 80), durch welche dem Behandlungsraum (14) außerdem Frischluft zuführbar ist, die zur Kabinenluft beiträgt;
so dass
e) die Kabinenluft einen Umluftanteil und einen Frischluftanteil umfasst;
wobei
f) der Umluftanteil und der Frischluftanteil der Kabinenluft abhängig von einer erfassten Lösemittelkonzentration in der Kabinenluft und/oder in der Prozessluft und/oder in der Abluft mittels einer Regel- und Steuereinrichtung (56 bis 88, 94) regelbar ist
**dadurch gekennzeichnet, dass**
g) der Eingangsschleuse (30) und/oder der Ausgangsschleuse (32) Frischluft aus einer Frischluftquelle (76) zuführbar ist, welche über die Eingangsschleuse (30) und/oder die Ausgangsschleuse (32) in den Behandlungsraum (14) geleitet wird;
h) der Eingangsschleuse (30) und/oder der Ausgangsschleuse (32) die Frischluft separat zuführbar ist.

8. Anlage nach Anspruch 7, **dadurch gekennzeichnet, dass** ein Lösemittelsensor (92) vorhanden ist, mit welchem die Lösemittelkonzentration in der Kabinenluft und/oder in der Prozessluft und/oder in der Abluft erfassbar ist.

9. Anlage nach Anspruch 7 oder 8, **dadurch gekennzeichnet, dass** dem Behandlungsraum (14) die Umluft über einen Luftraum (26) der Behandlungskabine (12) und/oder eine Eingangsschleuse (30) und/oder eine Ausgangsschleuse (32) zuführbar ist, in welche Umluft durch Leitungen (62, 64, 66) geleitet wird.

10. Anlage nach Anspruch 9, **dadurch gekennzeichnet, dass** Mittel (56, 58) vorhanden sind, durch welche einstellbar ist, welcher Anteil der Abluft als Umluft zu dem Luftraum (26) der Behandlungskabine (12), zur Eingangsschleuse (30) oder zur Ausgangsschleuse (32) gelangt.

11. Anlage nach Anspruch 10, **dadurch gekennzeichnet, dass** Mittel (68, 70, 72, 74) vorhanden sind, durch welche der jeweilige Volumenstrom der Umluft zu dem Luftraum (26) der Behandlungskabine (12) und/oder zu der Eingangsschleuse (30) und/oder zu der Ausgangsschleuse (32) einstellbar ist.

12. Anlage nach einem der Ansprüche 7 bis 11, **dadurch gekennzeichnet, dass** Mittel (82, 84, 86, 88) vorhanden sind, durch welche der jeweilige Volumenstrom der Frischluft zu der Eingangsschleuse (30) und/oder zur Ausgangsschleuse (32) einstellbar ist.

## Claims

1. Process for treating objects, in particular for coating objects with a solvent-containing coating material, in which
a) the objects are conveyed through a treatment booth (12) and, in a treatment chamber (14) there, undergo a treatment in which solvent is released;
b) the treatment chamber (14) is passed through by booth air that takes up solvent and discharges it from the treatment chamber as process air, whereby at least a fraction of solvent-laden process air can be conveyed back into the treatment chamber (14) in a circuit as circulating air and at least a fraction of the process air can be discharged as exhaust air;
c) fresh air, which contributes to the booth air, is moreover supplied to the treatment chamber (14);
so that
d) the booth air comprises a circulating air fraction and a fresh air fraction;
wherein
e) the solvent concentration in the booth air and/or in the process air and/or in the exhaust air is measured;
f) the circulating air fraction and the fresh air fraction of the booth air are regulated depending on the measured solvent concentration,
**characterised in that**
g) the fresh air is supplied to the treatment chamber (14) by way of an entry lock (30) and/or an exit lock (32);
h) the fresh air is supplied separately to the entry lock (30) and/ or the exit lock (32).

2. Process according to Claim 1, **characterised in that** the solvent concentration in the booth air and/or in the process air and/or in the exhaust air is measured by means of a solvent sensor (92).

3. Process according to Claim 1 or 2, **characterised in that** the circulating air is supplied to the treatment chamber (14) by way of an air chamber (26) of the treatment booth (12) and/or an entry lock (30) and/or an exit lock (32).

4. Process according to Claim 3, **characterised in that** it is possible to adjust the fraction of exhaust air which arrives as circulating air at the air chamber (26) of the treatment both (12), at the entry lock (30) or at the exit lock (32).

5. Process according to Claim 4, **characterised in that** it is possible to adjust the respective volumetric flow of the circulating air to the air chamber (26) of the treatment booth (12) and/or to the entry lock (30) and/or to the exit lock (32).

6. Process according to one of Claims 1 to 5, **characterised in that** it is possible to adjust the respective volumetric flow of fresh air to the entry lock (30) and/or to the exit lock (32).

7. Installation for treating objects, in particular for coating objects with solvent-containing coating material, which comprises:
a) a treatment booth (12) with a treatment chamber (14) in which objects undergo a treatment in which solvent is released;
b) a supply air system (90) by means of which booth air can be generated, which flows through the treatment chamber (14) and thereby takes up solvent and discharges it from the treatment chamber (14) as process air;
c) a circulating device (48) by means of which at least a fraction of solvent-laden process air can be conveyed back into the treatment chamber (14) in a circuit as circulating air, wherein at least a fraction of the process air can be discharged as exhaust air;
d) a fresh air device (76, 78, 80) by means of which fresh air, which contributes to the booth air, can moreover be supplied to the treatment chamber (14);
so that
e) the booth air comprises a circulating air fraction and a fresh air fraction;
wherein
f) the circulating air fraction and the fresh air fraction of the booth air can be regulated by means of a regulating and control device (56 to 88, 94) depending on a measured solvent concentration in the booth air and/or in the process air and/or in the exhaust air,
**characterised in that**
g) fresh air can be supplied to the entry lock (30) and/or the exit lock (32) from a fresh air source (76), which fresh air is conveyed into the treatment chamber (14) by way of the entry lock (30) and/or the exit lock (32);
h) the fresh air can be supplied separately to the entry lock (30) and/ or the exit lock (32).

8. Installation according to Claim 7, **characterised in that** a solvent sensor (92) is present whereby the solvent concentration in the booth air and/or in the process air and/or in the exhaust air can be measured.

9. Installation according to Claim 7 or 8, **characterised in that** the circulating air can be supplied to the treatment chamber (14) by way of an air chamber (26) of the treatment booth (12) and/or an entry lock (30) and/or an exit lock (32) into which circulating air is conveyed through ducts (62, 64, 66).

10. Installation according to Claim 9, **characterised in that** means (56, 58) are present whereby it is possible to adjust the fraction of the exhaust air which arrives as circulating air at the air chamber (26) of the treatment booth (12), at the entry lock (30) or at the exit lock (32).

11. Installation according to Claim 10, **characterised in that** means (68, 70, 72, 74) are present whereby it is possible to adjust the respective volumetric flow of the circulating air to the air chamber (26) of the treatment booth (12) and/or to the entry lock (30) and/or to the exit lock (32).

12. Installation according to one of Claims 7 to 11, **characterised in that** means (82, 84, 86, 88) are present whereby it is possible to adjust the respective volumetric flow of the fresh air to the entry lock (30) and/or to the exit lock (32).

## Revendications

1. Procédé de traitement d'objets, en particulier pour le revêtement d'objets avec un matériau de revêtement contenant un solvant, selon lequel
a) les objets sont transportés à travers une cabine de traitement (12) et y sont soumis, dans une chambre de traitement (14), à un traitement au cours duquel le solvant est libéré ;
b) la chambre de traitement (14) est traversée par l'air de la cabine, qui absorbe alors le solvant et l'évacué de la chambre de traitement en tant qu'air de processus, sachant qu'au moins une part de l'air de processus chargé de solvant est redirigée en circuit dans la chambre de traitement (14) en tant qu'air circulé et qu'au moins une part de l'air de processus peut être évacuée en tant qu'air évacué ;
c) de l'air frais est en outre apporté à la chambre de traitement (14), air qui forme une partie de l'air de cabine ;
de sorte que
d) l'air de cabine comprend une part d'air circulé et une part d'air frais ;
sachant que
e) on détecte la concentration en solvant dans l'air de cabine et/ou dans l'air de processus et/ou dans l'air évacué ;
f) la part d'air circulé et la part d'air frais de l'air de cabine sont régulées en fonction de la concentration en solvant détectée,
**caractérisé en ce que**
g) l'air frais est apporté à la chambre de traitement (14) par l'intermédiaire d'un sas d'entrée (30) et/ou d'un sas de sortie (32) ;
h) l'air frais est apporté séparément au sas d'entrée (30) et/ou au sas de sortie (32).

2. Procédé selon la revendication 1, **caractérisé en ce qu'**on détecte la concentration en solvant dans l'air de cabine et/ou dans l'air de processus et/ou dans l'air évacué au moyen d'un capteur de solvant (92).

3. Procédé selon la revendication 1 ou 2, **caractérisé en ce que** l'air circulé est apporté à la chambre de traitement (14) par l'intermédiaire d'une chambre d'air (26) de la cabine de traitement (12) et/ou d'un sas d'entrée (30) et/ou d'un sas de sortie (32).

4. Procédé selon la revendication 3, **caractérisé en ce qu'**on peut régler quelle part de l'air évacué parvient comme air circulé à la chambre d'air (26) de la cabine de traitement (12), au sas d'entrée (30) ou au sas de sortie (32).

5. Procédé selon la revendication 4, **caractérisé en ce qu'**on peut régler le débit volumique respectif d'air circulé vers la chambre d'air (26) de la cabine de traitement (12) et/ou vers le sas d'entrée (30) et/ou vers le sas de sortie (32).

6. Procédé selon l'une des revendications 1 à 5, **caractérisé en ce qu'**on peut régler le débit volumique respectif d'air frais vers le sas d'entrée (30) et/ou vers le sas de sortie (32).

7. Installation de traitement d'objets, en particulier pour le revêtement d'objets avec un matériau de revêtement contenant un solvant, qui comprend :
a) une cabine de traitement (12) avec une chambre de traitement (14) dans laquelle les objets sont soumis à un traitement au cours duquel le solvant est libéré ;
b) un système d'apport d'air (90), au moyen duquel on peut produire de l'air de cabine qui traverse la chambre de traitement (14) et absorbe alors le solvant et l'évacue de la chambre de traitement (14) en tant qu'air de processus,
c) un équipement de circulation (48), par lequel au moins une part de l'air de processus chargé de solvant peut être redirigée en circuit dans la chambre de traitement (14) en tant qu'air circulé, sachant qu'au moins une part de l'air de processus peut être évacuée en tant qu'air évacué ;
d) un équipement d'air frais (76, 78, 80), par lequel on peut en outre apporter à la chambre de traitement (14) de l'air frais, qui forme une partie de l'air de cabine ;
de sorte que
e) l'air de cabine comprend une part d'air circulé et une part d'air frais ;
sachant que
f) la part d'air circulé et la part d'air frais de l'air de cabine peuvent être régulées au moyen d'un équipement (56 à 88, 94) en fonction d'une concentration en solvant détectée dans l'air de cabine et/ou dans l'air de processus et/ou dans l'air évacué,
**caractérisée en ce que**
g) on peut apporter au sas d'entrée (30) et/ou au sas de sortie (32) de l'air frais provenant d'une source d'air frais (76), qui est dirigé par l'intermédiaire du sas d'entrée (30) et/ou du sas de sortie (32) dans la chambre de traitement (14) ;
h) l'air frais peut être apporté séparément au sas d'entrée (30) et/ou au sas de sortie (32).

8. Installation selon la revendication 7, **caractérisée en ce qu'**un capteur de solvant (92) est présent, par lequel on peut détecter la concentration en solvant dans l'air de cabine et/ou dans l'air de processus et/ou dans l'air évacué.

9. Installation selon la revendication 7 ou 8, **caractérisée en ce qu'**on peut apporter l'air circulé à la chambre de traitement (14) par l'intermédiaire d'une chambre d'air (26) de la cabine de traitement (12) et/ou d'un sas d'entrée (30) et/ou d'un sas de sortie (32), dans lesquels l'air circulé est dirigé par des conduites (62, 64, 66).

10. Installation selon la revendication 9, **caractérisée en ce que** des moyens (56, 58) sont présents, par lesquels on peut régler quelle part de l'air évacué parvient comme air circulé à la chambre d'air (26) de la cabine de traitement (12), au sas d'entrée (30) ou au sas de sortie (32).

11. Installation selon la revendication 10, **caractérisée en ce que** des moyens (68, 70, 72, 74) sont présents, par lesquels on peut régler le débit volumique respectif d'air circulé vers la chambre d'air (26) de la cabine de traitement (12) et/ou vers le sas d'entrée (30) et/ou vers le sas de sortie (32).

12. Installation selon l'une des revendications 7 à 11, **caractérisée en ce que** des moyens (82, 84, 86, 88) sont présents, par lesquels on peut régler le débit volumique respectif d'air frais vers le sas d'entrée (30) et/ou vers le sas de sortie (32).
